# EUROPEAN PATENT APPLICATION

(11) **EP 2 772 906 A1**
(43) Date of publication of application: **03.09.2014**
(21) Application number: 12852055.8
(22) Date of filing: 18.07.2012
(51) Int. Cl.: G10L 13/08, G06F 17/20

(54) **MULTILINGUAL SPEECH SYSTEM AND METHOD OF CHARACTER**

(30) Priority: 21.11.2011 KR 20110121825
(71) Applicant: Future Robot Co., Ltd., Suwon-si, Gyeonggi-do 443-766 (KR)
(72) Inventor: JUN, Young Jin, Yongin-si Gyeonggi-do 446-908 (KR); SONG, Se Kyong, Seongnam-si Gyeonggi-do 463-060 (KR)
(74) Representative: Regimbeau
(86) International application number: PCT/KR2012/005722
(87) International publication number: WO 2013/077527

(57) **Abstract**

The present invention relates to a system and method for providing multilingual speech motions of a character, and more specifically, to a multilingual speech system and method, wherein a two-dimensional or three-dimensional character speaks to express messages in multiple languages according to surroundings whereby messages such as consultations or guide services or the like can be precisely delivered through the character. To accomplish the objective, the multilingual speech system of the character according to the present invention includes a context-aware unit to recognize the surroundings; a conversation selection unit to select spoken words in accordance with the recognized surroundings; a Unicode multilingual database in which the spoken words are stored in Unicode-based multiple languages according to languages of respective nations; a behavior expression unit to express behaviors in accordance with the selected spoken words; and a work processing unit to synchronize and express the selected spoken words and the behaviors according to the spoken words.

## Description

### BACKGROUND OF THE INVENTION

### 1. Technical Field

The present invention relates to a system and method for providing a multilingual speech motion of a character, and more specifically, to a multilingual speech system and method, wherein a two-dimensional or three-dimensional character speaks to express messages in many languages according to surroundings whereby messages such as consultations or guide services or the like can be precisely delivered through the character.

### 2. Description of the Related Art

With active international exchanges in recent years, foreign visitors have been increased rapidly around the world. Therefore, the foreign visitors having no geographical or cultural knowledge of the nations to be visited need consultations or guide services using their own languages. Thus, the need for experts capable of using many languages is increasing.

The need for experts capable of using many languages is more increasing on holding global events such as Olympic, Asian game, World Cup etc. Therefore, consultation or guide systems using guide robots have been developed instead of the experts in recent years, and the guide robots provide consultations or guide services using their own languages, if necessary, to foreign visitors.

The guide robots display a two-dimensional or three-dimensional character on the screen to naturally transfer consultations or guide services to foreign visitors, implement the same face looks and lip shapes as real human, etc., and may provide a variety of types of information to foreign visitors into voices formed in the languages for each nation.

A speech motion, in which two-dimensional or three-dimensional character provides a variety of types of information to a user into the voices, becomes data corresponding to spoken words into texts, and outputs the texts into the voices. The speech system using used for the speech motion of the character linguistically interprets the inputted texts, and converts the texts into natural synthetic speech by synthesizing the interpreted texts with the voices. That is, this is a TTS (Text-To Speech) technology.

The TTS (Text-To Speech) technology converts encoded character information into audible voice information. The symbolized character information is variously present according to the languages or nations to be used, and is mapped into subsequent bit types having binary values of 0 and 1, a computer can understand, by character encoding.

ASCII encoding system encoding the character information may represent up to total 120 characters using 7 bits. ISO-8859-1 encoding system, which is a new character set that includes the characters used in west European nations into the existing ASCII character set, uses 8 bit (1 byte) code system because all ASCII character code may not be accepted by an adopted 7 bit code system due to the extension of ASCII. Representative character codes using for each nation are as follows. Europe uses ISO 8859 series, ISO 6937, Middle East uses ISO8859 series, China uses GB2312-80, GBK, BIG5, Japanese uses a native character code such as JIS, and Korea uses the native character code such as KSX 1001.

When character information is variously encoded according to the languages as above, separate sentences for each language should be configured to output data corresponding to the spoken words, that is, the text into the voices. That is, the languages are determined by user's explicit selection, etc. on the situation, and the sentences are brought according to the corresponding languages from database storing the texts according to the corresponding languages in case of determining the languages and the sentences are output into speeches, that is, the voices.

In a prior multilingual speech system mentioned above, there is a problem in that methods encoding the character information are different for each language, the sentences having different language codes for each various language may not be spoken at a time, and different languages are designated after speaking the specific languages and the corresponding languages should be spoken again.

In addition, in the prior multilingual speech system, there is a problem in that the rules for the schemes selecting the languages according to many languages should be separately made, the rules for the orders for speaking the corresponding sentences according to the languages should be made, and the programs to implement the system become complex. Therefore, there is a problem in that the system speaking as one language should be configured, until the specific situation is lapsed, on selecting one language without making as types subsequently changing the languages.

Further, when feeling expression and speech motions formed in many languages are applied to a two-dimensional or three-dimensional character, the feeling expression and the speech motions have been subsequently progressed separately. That is, for example, the speech motions moving the lips are followed after performing feeling expression motions such as character's laughing appearance, or the feeling expression motions such as crying appearance are performed after performing the speech motions. Therefore, in order to enhance power of delivery for messages or stories according to the motions of two-dimensional or three-dimensional character, technologies capable of simultaneously performing the speech motions while performing feeling expression motions such as crying or laughing are needed.

### SUMMARY OF THE INVENTION

An advantage of some aspects of the invention that it provides a multilingual speech system and method of a character to solve a problem in that methods to encode character information for each various language are different and the sentences corresponding to the languages having different codes may not be spoken at a time, when two-dimensional or three-dimensional character provides speech motions that expresses messages in many languages according to surroundings.

According to an aspect of the invention, there is provided a multilingual speech system of a character including a context-aware unit to recognize surroundings; a conversation selection unit to select spoken words in accordance with the recognized surroundings; a Unicode multilingual database in which the spoken words are stored in Unicode-based multiple languages according to languages for each nations; a behavior expression unit to express behaviors in accordance with the selected spoken words; and a work processing unit to synchronize and express the selected spoken words and the behaviors according to the spoken words.

Preferably, the multilingual speech system of the character further includes a feeling production unit to select feelings in accordance with the recognized surroundings, wherein the work processing unit synchronizes and expresses the selected feelings and the behaviors according to the spoken words.

Further, the Unicode multilingual database additionally stores language identification information identifying the languages for each nation, and the conversation selection unit selects the spoken words in accordance with the corresponding languages by the language identification information.

The behavior expression unit includes a voice synthesis unit to output the selected spoken words into voices, and a face expression unit to display faces according to the selected spoken words on the screen.

Further, the voice synthesis unit extracts consonant and vowel information necessary for producing lip shapes from the spoken words, includes a syntax analysis unit to produce time information pronouncing consonants and vowels changing the lip shapes, and a sound source production unit to produce sound sources corresponding to the selected spoken words and to output the produced sound sources into the voices, and the face expression unit includes a feeling expression unit to select face looks corresponding to feeling expression according to the recognized surroundings and to display the selected face looks on the screen, and a speech expression unit to select the lip shapes necessary for representing the selected spoken words and to display the selected lip shapes on the screen.

The face expression unit further includes a look database to store the face looks into images, and a lip shape database to store the lip shapes into the images.

The work processing unit adds the selected feeling information to the produced sound sources, changes tones thereof, and outputs the changed tones into the voices.

According to another aspect of the invention, there is provided a multilingual speech method of a character including a context-aware step to recognize surroundings; a conversation selection step to select the spoken words according to the corresponding languages by language identification information in accordance with the recognized surroundings from a Unicode multilingual database, stored in Unicode-based multiple languages, including the language identification information identifying the languages for each nation and the spoken words corresponding to the languages for each nation; and a behavior expression step to synchronize and express the selected spoken words and the behaviors according to the spoken words.

Preferably, the multilingual speech method of the character further includes a feeling production step to select feelings in accordance with the recognized surroundings, wherein the behavior expression step synchronizes and expresses the selected feeling and the behaviors according to the spoken words.

The behavior expression step includes a voice synthesis step to output the selected spoken words into voices, and a face expression unit to display faces according to the selected spoken words on the screen.

The voice synthesis step extracts consonant and vowel information necessary for producing lip shapes from the spoken words, includes a syntax analysis step to produce time information pronouncing consonants and vowels changing the lip shapes, and a sound source production step to produce sound sources corresponding to the selected spoken words and to output the produced sound sources to the voices, and the face expression step includes a feeling expression step to select face look corresponding to feeling expression according to the recognized surroundings and to display the selected face look on the screen, and a speech expression step to select the lip shapes necessary for representing the selected spoken words and to display the selected lip shapes on the screen.

Further, the sound source production step adds the selected feeling information to the produced sound sources, changes tones thereof, and outputs the changed tones into the voices.

### BRIEF DESCRIPTION OF THE DRAWINGS

FIG. 1 is a block view representing configurations of a multilingual speech system of a character according to the present invention.
FIG. 2 is a flow view describing a multilingual speech method of a character according to the present invention.
FIG. 3 is a flow view describing steps synchronizing and then expressing feelings and behaviors, when a character speaks in many languages, according to the present invention.

### DESCRIPTION OF THE PREFERRED EMBODIMENTS

A multilingual speech system and method of a character according to the present invention proposes technological characteristics that may simultaneously represent languages of various nations and may easily speak many languages simultaneously at a specific situation, when a two or three dimensional character provides speech motions expressing messages in many languages according to surroundings.

Hereinafter, exemplary embodiments, advantages, and characteristics of the present invention will be described with reference to the enclosed drawings

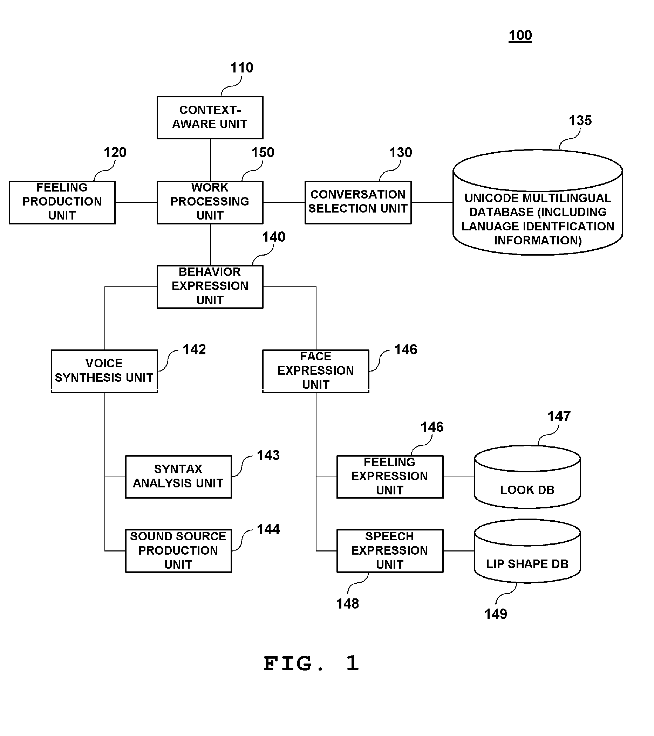

FIG. 1 is a block view representing configurations of a multilingual speech system of a character according to the present invention. Referring to FIG.1, a multilingual speech system 100 of a character according to the present invention includes a context-aware unit 110 to recognize surroundings, a conversation selection unit 130 to select spoken words in accordance with the recognized surroundings, a Unicode multilingual database 135 in which the spoken words are stored in Unicode-based multiple languages according to languages for each nation, a behavior expression unit 140 to express behaviors in accordance with the selected spoken words, and a work processing unit 150 to synchronize and express the selected words and the behaviors according to the spoken words.

Preferably, the multilingual speech system 100 of the character according to the present invention further include a feeling production unit 120 to select feelings in accordance with the recognized surroundings, wherein the work processing unit 150 may synchronize and express the selected feelings and the behaviors according to the spoken words.

The context-aware unit 110 recognizes the surroundings of the character. For example, it recognizes the surroundings, approached by customers, when the customers approach to less than a certain distance around the character. The context-aware unit 110 is implemented by a system, etc. that takes the surroundings by a camera and analyzes the taken images, or by all kinds of sensors recognizing the surroundings.

The feeling production unit 120 selects the feelings in accordance with the surroundings recognized from the context-aware unit 110. For example, when the context-aware unit 110 recognizes customer's approaches, the feeling production unit 120 selects feeling representation such as laughs. The feeling production unit 120 selects the feelings according to the surroundings recognized by the context-aware unit 110, or inputs the feelings and the spoken words randomly selected by a user.

The conversation selection unit 130 selects the spoken words in accordance with the surroundings recognized from the context-aware unit 110. That is, when the context-aware unit 110 recognizes customer's approaches, it selects, for example, the spoken words called Hi, come on in. The conversation selection unit 130 selects the spoken words according to the surroundings recognized by the context-aware unit 110, or selects and inputs the spoken words randomly selected by the user.

Further, the conversation selection unit 130 selects the spoken words as the languages for each nation and may select the spoken words according to the corresponding language. A method to select the languages for each nation may select the spoken words corresponding to the corresponding language and may randomly select the languages by the user's explicit selection on recognizing the corresponding language by the context-aware unit 110.

The Unicode multilingual database 135 stores data corresponding to the spoken words in the Unicode-based multiple languages in accordance with the languages for each nation.

A Unicode is called USC (Universal Code System), having 2 bytes type, that is established as an international standard and is universally common. The Unicode standardizes a value giving to 1 character as 16 bits to smooth exchange for data. In a prior art, the value per 1 character of codes is 7 bits in English, is 8 bits in non-English, and is 16 bits in Korean or Japanese, wherein all the values is standardized as 16 bits. An alphanumeric keypad such as ISO/IEC 10646-1 one by one gives code values to characters and special symbols of 26 languages used in the world

The Unicode, which overcome limits of a prior ASCII and is to be compatible with all world's languages, is a character code internationally designed to represent all languages used by human, and a single large character set that includes all of encoding structures of the existing languages.

Therefore, the Unicode multilingual database 135 stores the spoken words according to the languages for each nation in the Unicode-based multiple languages, and therefore the conversation selection unit 130 may select the spoken words according to the languages for each nation from the Unicode multilingual database 135, and may simultaneously represent the languages of many nations without colliding and may simultaneously speak many languages at a specific situation.

Preferably, the Unicode multilingual database 135 additionally stores language identification information identifying the languages for each nation, and the conversation selection unit 130 may select the spoken words according to the corresponding language by the language identification information. Thus, it is possible to select the spoken words written in the corresponding language by the language identification information only without complex processing logics such as rules related to separable language selection, and to fluidly configure speech motions simultaneously representing languages of multiple nations.

When the conversation selection unit 130 may select, for example, the spoken words called { 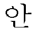 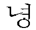 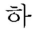 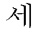 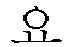 .}, it may select the spoken words written in Hangul by the language identification information having {<lang type=korean> 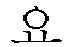 . < / lang} scheme in case of Hangul, and may select the spoken words written in English by the language identification information having {<lang type=english> Hello.</lang} scheme in case of English, thereby to fluidly select the spoken words of the corresponding language by the language identification information only.

The behavior expression unit 140 expresses the behaviors according to the spoken words selected from the conversation selection unit 130. Preferably, the behavior expression unit 140 includes a voice synthesis unit 142 to output the selected spoken words into the voices, and a face expression unit 145 to display the faces according to the selected spoken words on the screen.

The voice synthesis unit 142 extracts consonant and vowel information necessary for producing lip shapes from the spoken words selected from the conversation selection unit 130, includes a syntax analysis unit 143 to produce time information pronouncing consonants and vowels changing the lip shapes, and a sound source production unit 144 to produce sound sources corresponding to the spoken words selected from the conversation selection unit 130 and output the produced sound sources into the voices.

In addition, the face expression unit 145 includes a feeling expression unit 146 to select face looks corresponding to feeling expression according to the surroundings recognized from the context-aware unit 110 and to display the selected face looks on the screen, and a speech expression unit 148 to select the lip shapes necessary for representing the spoken words selected from the conversation selection unit 130 and to display the selected lip shapes on the screen.

The face expression unit 145 further includes a look database 147 to store the face looks into images, and the feeling expression unit 146 selects the face looks corresponding to feeling expression according to the surroundings from face look images stored into the look database 147 and therefore displays the selected face looks on the screen.

Further, the face expression unit 145 further includes a lip shape database 149 to store the lip shapes into the images, and the speech expression unit 148 selects the lip shapes necessary for representing the spoken words from lip shape images stored into the lip shape database 149 and displays the selected lip shapes on the screen.

The work processing unit 150 synchronizes and expresses the selected spoken words and the behaviors according to the spoken words. When the work processing unit 150 further includes the feeling production unit 120, it synchronizes and expresses the feelings and the behaviors according to the spoken words. The work processing unit 150 analyzes consonants and vowels of the spoken words by the syntax analysis unit 143, selects the lip shapes based on the vowels that changes the lip shapes most significantly, and may select the lip shapes closing lips before selecting next vowels on pronouncing the consonants closing the lips

The work processing unit 150 adds the selected feeling information to the produced sound sources, changes the tones thereof, and outputs the changed tones into the voice. Therefore, the work processing unit 150 adds the feeling information such as laughs to the face looks such as laughing faces, outputs the voices for the spoken words changed with the tones, and provides the character capable of representing the lip shapes according to the consonants and vowels of the spoken words to the users.

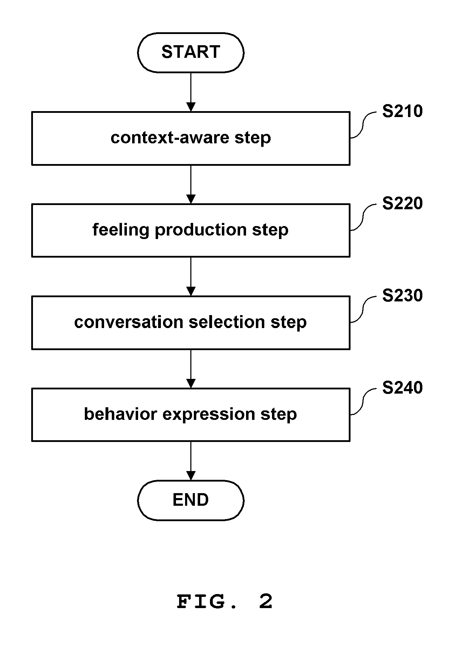

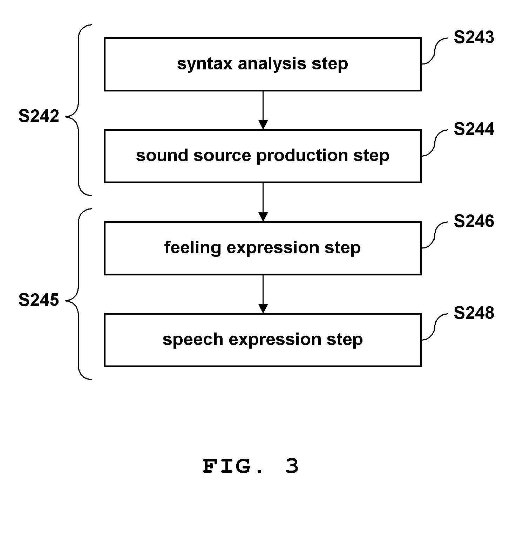

FIG. 2 is a flow view describing a multilingual speech method of the character according to the present invention. FIG. 3 is a flow view describing steps synchronizing and then expressing the feelings and behaviors, when a character speaks in many languages, according to the present invention.

Referring to FIG. 2 and FIG. 3, a multilingual speech method 200 of a character according to the present invention includes a context-aware step S210 to recognize the surroundings, a conversation selection step S230 to select the spoken words according to the corresponding language by the language identification information in accordance with the recognized surroundings from a Unicode multilingual database 135, stored into Unicode-based multiple languages, including the language identification information identifying the languages for each nation and the spoken words corresponding to the languages for each nation, and a behavior expression step S240 to synchronize and express the selected spoken words and the behaviors according to the spoken words.

Preferably, the multilingual speech method 200 of the character further includes a feeling production step S220 to select the feelings according to the surroundings recognized from the context-aware step S210, wherein the behavior expression step S240 synchronizes and expresses the selected feelings and the behaviors according to the spoken words

The context-aware step S210 recognizes the surroundings through the context-aware unit 110. The context-aware unit 110 is implemented by a system, etc. that takes the surroundings by a camera and analyzes the taken images, or by all kinds of sensors recognizing the surroundings.

Hereinafter, the feeling production step S220 selects the feelings according to the recognized surroundings from the feeling production unit 120. The feeling production step S220 selects the feelings according to the surroundings recognized by the context-aware unit 110, or selects and inputs the feelings and spoken words randomly selected by the user.

The conversation selection step S230 selects the spoken words according to the corresponding language by the language identification information in accordance with the surroundings recognized by the conversation selection unit 130 from the Unicode multilingual database 135, stored into Unicode-based multiple languages, including the language identification information identifying the languages for each nation and the spoken words corresponding to the languages for each nations.

The conversation selection step S230 selects the corresponding language by the language identification information stored into the Unicode multilingual database 135 and selects the spoken words according to the language. Thus, it is possible to select the spoken words written in the corresponding language by the language identification information only without complex processing logics such as rules related to separable language selection, and to fluidly configure speech motions simultaneously representing languages of multiple nations.

The behavior expression step S240 synchronizes the spoken words selected from the conversation selection unit 130 and the behaviors according to the spoken words and expresses the synchronized spoken words to the behavior expression unit 140. Further, when the behavior expression step S240 further includes the feeling production step S220, it synchronizes the feelings selected from the feeling production unit 120 and the behaviors according to the spoken words selected from the conversation selection unit 130 and therefore expresses the synchronized feelings and behaviors to the behavior expression unit 140. Preferably, the behavior expression step S240 includes a voice synthesis step S242 to output the selected spoken words into voices by the voice synthesis unit 142, and a face expression step S245 to display the faces according to the selected spoken words on the screen by the face expression unit 145.

The voice synthesis step S242 extracts consonant and vowel information necessary for producing lip shapes from the spoken words by the syntax analysis unit 143, includes a syntax analysis step S243 to produce time information pronouncing consonants and vowels changing the lip shapes, and a sound source production step S244 to produce the sound sources corresponding to the selected spoken words by the sound source production unit 144 and to output the produced sound sources into the voices.

The sound source production step S244 adds the selected feeling information to the sound sources produced by the work processing unit 150, changes tones thereof, and outputs the changed tones into the voices by the sound source production unit 144.

In addition, the face expression step S245 includes a feeling expression step S246 to select the face looks corresponding to the feeling expression according to the recognized surroundings and to display the selected face looks on the screen, and a speech expression step S248 to select the lip shapes necessary for representing the selected spoken words and to display the selected lip shapes on the screen.

The feeling expression step S246 selects the face looks from the look database 147 that stores the face looks into the images and displays the selected face looks on the screen by the feeling expression unit 146, and the speech expression step S248 selects the lip shapes necessary for representing the spoken words selected from the lip shape database 149 that stores the lip shapes into the images and displays the selected lip shapes on the screen by the speech expression unit 148.

According to an embodiment of the present invention, there is a remarkable effect in that may simultaneously represent the languages of multiple nations and may easily process the functions simultaneously speaking multiple languages at the specific situation by selecting the spoken words according to corresponding language from a Unicode multilingual database stored in Unicode-based multiple languages by the spoken words according to the languages for each nation and by outputting the selected spoken words into the voices.

According to another embodiment of the present invention, there is a remarkable effect in that may use speech engines written in the corresponding language by the language identification information only without complex processing logics such as rules related to separable language selection and may fluidly configure the speeches simultaneously representing languages of multiple nations by including language identification information identifying the languages for each nation into the spoken words

According to further another embodiment of the present invention, there is a remarkable effect in that may simultaneously express the face looks added with various feeling expression and speech messages in many languages by two-dimensional or three-dimensional character

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A multilingual speech system of a character, comprising:
a context-aware unit to recognize surroundings;
a conversation selection unit to select spoken words in accordance with the recognized surroundings;
a Unicode multilingual database in which the spoken words are stored in Unicode-based multiple languages according to languages for each nation;
a behavior expression unit to express behaviors in accordance with the selected spoken words; and
a work processing unit to synchronize and express the selected spoken words and the behaviors according to the spoken words.

2. The multilingual speech system of the character according to claim 1, further comprising a feeling production unit to select feelings in accordance with the recognized surroundings,
wherein the work processing unit synchronizes and expresses the selected feelings and the behaviors according to the spoken words.

3. The multilingual speech system of the character according to claim 1 or claim 2, wherein the Unicode multilingual database additionally stores language identification information identifying the languages for each nation, and the conversation selection unit selects the spoken words in accordance with the corresponding language by the language identification information.

4. The multilingual speech system of the character according to claim 3, wherein the behavior expression unit includes a voice synthesis unit to output the selected spoken words into voices, and a face expression unit to display the faces according to the selected spoken words on the screen.

5. The multilingual speech system of the character according to claim 4, wherein the voice synthesis unit extracts consonant and vowel information necessary for producing lip shapes from the spoken words, includes a syntax analysis unit to produce time information pronouncing consonants and vowels changing the lip shapes, and a sound source production unit to produce sound sources corresponding to the selected spoken words and to output the produced sound sources into the voices, and the face expression unit includes a feeling expression unit to select face looks corresponding to feeling expression according to the recognized surroundings and to display the selected face looks on the screen, and a speech expression unit to select the lip shapes necessary for representing the selected spoken words and to display the selected lip shapes on the screen.

6. The multilingual speech system of the character according to claim 5, wherein the face expression unit further includes a look database to store the face looks into images, and a lip shape database to store the lip shape into the images.

7. The multilingual speech system of the character according to claim 5, wherein the work processing unit adds the selected feeling information to the produced sound sources, changes tones thereof, and outputs the changed tones into the voices.

8. A multilingual speech method of a character, comprising:
a context-aware step to recognize surroundings;
a conversation selection step to select the spoken words according to the corresponding language by language identification information in accordance with the recognized surroundings from a Unicode multilingual database, stored into Unicode-based multiple languages, including the language identification information identifying the languages for each nation and the spoken words corresponding to the languages for each nation; and
a behavior expression step to synchronize and express the selected spoken words and the behaviors according to the spoken words.

9. The multilingual speech method of the character according to claim 8, further comprising a feeling production step to select the feelings in accordance with the recognized surroundings,
wherein the behavior expression step synchronizes and expresses the selected feeling and the behaviors according to the spoken words.

10. The multilingual speech method of the character according to claim 9, wherein the behavior expression step includes a voice synthesis step to output the selected spoken words into voices, and a face expression unit to display the faces according to the selected spoken words on the screen.

11. The multilingual speech method of the character according to claim 10, wherein the voice synthesis step extracts consonant and vowel information necessary for producing lip shapes from the spoken words, includes a syntax analysis step to produce time information pronouncing consonants and vowels changing the lip shapes, and a sound source production step to produce sound sources corresponding to the selected spoken words and to output the produced sound sources into the voices, and the face expression step includes a feeling expression step to select face looks corresponding to feeling expression according to the recognized surroundings and to display the selected face looks on the screen, and a speech expression step to select the lip shapes necessary for representing the selected spoken words and to display the selected lip shapes on the screen.

12. The multilingual speech method of the character according to claim 11, wherein the sound source production step adds the selected feeling information to the produced sound sources, changes tones thereof, and outputs the changed tones into the voices.
